# EUROPEAN PATENT SPECIFICATION

(11) **EP 2 881 700 B1**
(45) Date of publication and mention of the grant of the patent: **08.01.2020**
(21) Application number: 13823136.0
(22) Date of filing: 19.07.2013
(51) Int. Cl.: G01B 7/28, G01N 27/90

(54) **DEVICE AND METHOD FOR DETECTING OVALITY OF CIRCUMFERENTIAL CROSS SECTION OF A HEAT-EXCHANGER TUBE**
VORRICHTUNG UND VERFAHREN ZUR ERKENNUNG EINER OVALITÄT EINES KREISFÖRMIGEN QUERSCHNITTS EINES ROHRS EINES WÄRMETAUSCHERS
DISPOSITIF ET MÉTHODE DE DÉTECTION D'UNE OVALISATION DE SECTION TRANSVERSALE CIRCONFÉRENTIELLE D'UN TUBE D'UN ÉCHANGEUR DE CHALEUR

(30) Priority: 23.07.2012 KR 20120079750
(43) Date of publication of application: 10.06.2015
(73) Proprietor: Korea Atomic Energy Research Institute, Daejeon 305-353 (KR); Korea Hydro Nuclear Power Co., Ltd., Seoul 135-791 (KR)
(72) Inventor: LEE, Deok Hyun, Daejeon 302-280 (KR); CHOI, Myung Sik, Daejeon 302-243 (KR); HUR, Do Haeng, Daejeon 305-729 (KR); HAN, Jung Ho, Yeongi-gun Chungcheongnam-do 339-763 (KR)
(74) Representative: Nederlandsch Octrooibureau
(86) International application number: PCT/KR2013/006485
(87) International publication number: WO 2014/017785

(56) References cited:
- WO-A1-2004/088301
- JP-A- 2003 315 173
- KR-A- 20120 002 036
- KR-B1- 100 562 358
- KR-B1- 100 577 525
- US-A- 5 623 203
- US-A- 5 914 596
- US-A1- 2007 018 661

## Description

### Technical Field

The present invention relates to an apparatus for detecting an ovality of a circumference of a cross section of a heat exchanger tube used in nuclear and thermoelectric power plants, and a method thereof.

### Background Art

A heat exchanger for nuclear and thermoelectric power plants includes a bundle of tubes having an extensive length, and is inspected for operational defects, for example, a crack, and damage using a non-destructive test technology, followed by repairs.

When the tube is deformed into an oval shape of a circumference in a cross section due to an external force or bending, a high degree of stress is applied to inner and outer surfaces of the tube, further accelerating the occurrence of corrosion induced cracks and damage. Accordingly, detection of an ovality of a circumference of a cross section of the tube and measurement of a degree of ovality may lead to efficient management, for example, by predicting an occurrence of defects, reinforcing a non-destructive test, and early detecting defects, because the detected tube region of ovality is prone to cracks and damage that will be accelerated.

A conventional non-destructive technology for a heat exchanger tube is designed to detect an occurrence of a defect, and a technology for detecting an ovality and for measuring a degree of ovality of a circumference of a cross section of a tube that acts as a predisposing factor accelerating an occurrence of a defect, has yet to be developed.

WO 2004/088301 A1 discloses a non-contact method of inspecting a tubular for defects, which method comprises the steps of taking a measurement representative of a distance between a non-contact measuring means and a surface of part of a tubular; generating an output electrical signal representative of said measurement; and repeating step at different parts of the tubular. US 2007/0018661 A1 an apparatus for concurrently detecting a defect occurring in a heat exchanger tube and a geometric transition of the heat exchanger tube including: the first detection unit detecting a defect of the heat exchanger tube; and the second detection unit detecting a geometric transitionof the heat exchanger tube,.

### Disclosure of Invention

### Technical Goals

An aspect of the present invention provides an apparatus and method for detecting an ovality and for measuring a degree of ovality of a circumference of a cross section a heat exchanger tube for nuclear and thermoelectric power plants that may occur due to deformation caused by an external force or bending.

### Technical solutions

According to an aspect of the present invention, there is provided, according to claim 1, an apparatus for detecting an ovality of a circumference of a cross section of a heat exchanger tube.

According to another aspect of the present invention, there is provided, according to claim 7, a method of detecting an ovality of a circumference of a cross section of a heat exchanger tube.

The invention is defined by the subject-matter of the independent claims. Particular embodiments of the invention are set out in the dependent claims. Examples and technical descriptions of apparatuses, products and/or methods in the description and/or drawings which are not covered by the claims are presented not as embodiments of the invention but as background art or examples useful for understanding the invention.

### Effects of the Invention

According to exemplary embodiments of the present invention, damage occurring in a heat exchange tube during an operation of nuclear and thermoelectric power plants may be predicted and a preventive management on vulnerable areas may be performed. In addition, damage may be fundamentally prevented or suppressed because a quality management to detect an ovality and measure a degree of ovality of a circumference of a cross section of the heat exchanger tube is enabled at a stage of manufacturing and assembling the heat exchanger tube.

### Brief Description of Drawings

FIG. 1 is a side view illustrating an example of an apparatus for detecting an ovality of a heat exchanger tube according to an exemplary embodiment of the present invention.
FIG. 2 is a cross sectional view of the apparatus taken along the line A-A of FIG. 1 when a heat exchanger tube is in a normal state.
FIG. 3 is a graph illustrating a detection result in the state of FIG. 2.
FIG. 4 is a cross sectional view of the apparatus taken along the line A-A in FIG. 1 when a heat exchanger tube is in an oval state.
FIG. 5 is a graph illustrating a detection result in the state of FIG. 4.
FIG. 6 is a cross sectional view illustrating a modified example of the apparatus of FIG. 2.

### Best Mode for Carrying Out the Invention

Exemplary embodiments of the present invention are described in detail with reference to the accompanying drawings. In the description of the exemplary embodiments of the present invention, descriptions of well-known functions or components are omitted so as to not unnecessarily obscure the embodiments herein.

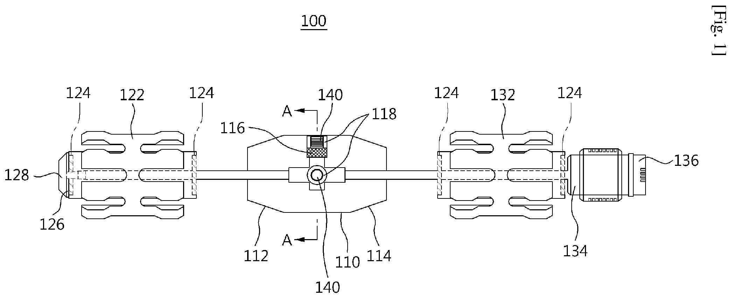

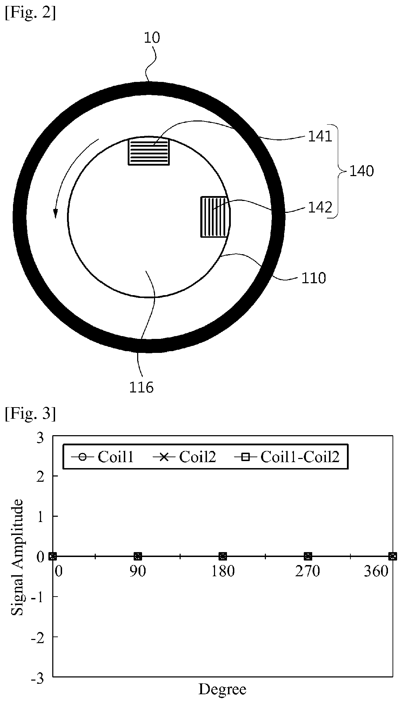

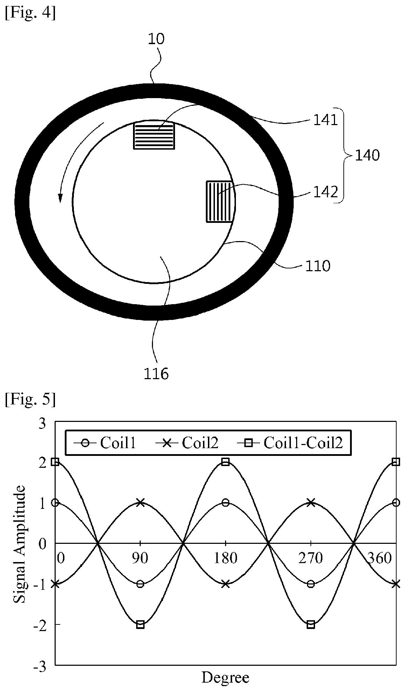

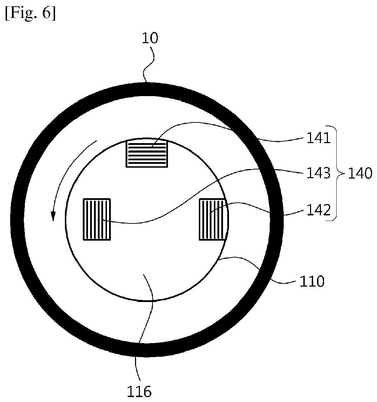

Hereinafter, an apparatus (100) for detecting an ovality of a circumference of a cross section of a heat exchanger tube according to an exemplary embodiment of the present invention is described in detail with reference to FIGS. 1 through 6. More particularly, FIG. 1 is a side view illustrating an example of the apparatus (100) for detecting an ovality of a heat exchanger tube (10) according to an exemplary embodiment of the present invention. FIG. 2 is a cross sectional view of the apparatus (100) taken along the line A-A of FIG. 1 when the heat exchanger tube (10) is in a normal state. FIG. 3 is a graph illustrating a detection result in the state of FIG. 2. FIG. 4 is a cross sectional view of the apparatus (100) taken along the line A-A in FIG. 1 when the heat exchanger tube (10) is in an oval state. FIG. 5 is a graph illustrating a detection result in the state of FIG. 4. FIG. 6 is a cross sectional view illustrating a modified example of the apparatus (100) of FIG. 2.

Referring to FIG. 1, the apparatus (100) may include a probe body (110) inserted in a heat exchanger tube (10 of FIGS. 2 and 4) and an eddy current coil (140) to detect an ovality of the heat exchanger tube (10).

The probe body 110 may be inserted in the heat exchanger tube 10, moved in a lengthwise direction of the heat exchanger tube 10, and rotated in a circumferential direction of an inner surface of the heat exchanger tube 10. Also, the probe body 110 may be formed of a cylinder corresponding to a shape of the inner surface of the heat exchanger tube 10. The probe body 110 may include an upper body 112 coupled with a support foot 122 and a lower body 114 coupled with a support foot 132, and a coil support unit 118 and an elastic member 116 in which the eddy current coil 140 is mounted and supported.

In a center of the probe body 110, the spirally wound eddy current coil 140 may be included. The eddy current coil 140 may detect an ovality of the heat exchanger tube 10 by measuring an amplitude difference of signals according to a change in a distance from the inner surface of the heat exchanger tube 10 obtained by the movement of the probe body 110 in a longitudinal direction within the heat exchanger tube 10 or rotation of the probe body 110 in a circumferential direction of the heat exchanger tube 10.

The probe body 110 may include the support feet 122 and 132 disposed at both ends of the probe body 110, and the support feet 122 and 132 are in an elastic contact with the inner surface of the heat exchanger tube 10 so as to position the probe body 110 in the center of the heat exchanger tube 10. When the probe body 110 is inserted in the heat exchanger tube 10, the support feet 122 and 132 may enable the probe body 110 to be positioned in the center of the heat exchanger tube 10 in such a state that an outer surface of the probe body 110 is in a non-contact state with the inner surface of the heat exchanger tube 10. Also, each of the support feet 122 and 132 may have a bearing 124 at an end to support the probe body 110 stable by preventing the support feet 122 and 132 from rotating even though the probe body 110 makes a rotation motion in a circumferential direction. Also, the support feet 122 and 132 may be elastically connected to both ends of the probe body 110 using an flexible elastic support unit 120 that may enable the support feet 122 and 132 to move along a curved inner surface of the heat exchanger tube 10 even in a bent region of the heat exchanger tube 10 while maintaining a contacted state and may support the probe body 110 elastically. An ovality of the heat exchanger tube 10 may be detected easily even in the bent region of the heat exchanger tube 10 because the flexible elastic support unit 120 and the support feet 122 and 132 support the probe body 110 elastically. Also, when the elastic member 116 is included in a lower portion of the coil support unit 118, the eddy current coil 140 moves along the inner surface of the heat exchanger tube 10 while maintaining the contacted state with the inner surface of the heat exchanger tube 10. Accordingly, wear, corrosion, and a crack inside of the heat exchanger tube 10 may be measured.

The support feet 122 and 132 may include an upper support foot 122 and a lower support foot 132. The upper support foot 122 may be coupled with the elastic support unit 120 by a washer 126 and a bolt 128, thereby being prevented from separation from one end of the outside of the upper body 112. The lower support foot 132 may be coupled with the elastic support unit 120 by a nut 134 for fastening, thereby being prevented from separation from one end of the outside of the lower body 114.

A conductor socket 136 may be provided at the outside of the nut 134 for fastening the lower support foot 132. The conductor socket 136 may be connected to wires (not shown) of the eddy current coil 140 used for transmitting an alternating current signal and receiving an eddy current signal. The conductor socket 136 may be used to transmit, a driving force for linear movement and rotation motions of the probe body 110 as well as electrical signals of the eddy current coils 140 for communication. Also, the conductor socket 136 may include a recorder (not shown) to record an amplitude difference between signals measured in a first coil unit 141 and a second coil unit 142.

The eddy current coil 140 may be mounted on and supported by the coil support unit 118. The coil support unit 118 may be formed in a cylindrical shape and fixably mounted on the probe body 110, and may provide a space for accommodating the eddy current coil 140 and serve to fix the eddy current coil 140. The coil support unit 118 may include an elastic member 116 in a lower portion to support the eddy current coil 140 elastically. In this case, the coil support unit 118 may enable the eddy current coil 140 to maintain the contact with the inner surface of the heat exchanger tube 10, corresponding to the shape of the inner surface of the heat exchanger tube 10.

The eddy current coil 140 may be mounted at the center of the coil support unit 118.

The eddy current coil 140 may include a first coil unit 141 and a second coil unit 142. The eddy current coil 140 may detect an ovality of a cross section of the heat exchanger tube 10 through an amplitude difference between signals measured in the first coil unit 141 and the second coil unit 142.

More particularly, the first coil unit 141 and the second coil unit 142 may be mounted at different locations in the probe body 110. The first coil unit 141 may be mounted at one location of the probe body 110, and the second coil unit 142 may be mounted at a location spaced a predetermined distance away from the first coil unit 141 in a circumferential direction of the probe body 110. For example, the first coil unit 141 and the second coil unit 142 may be disposed at an angle of 90 degrees with respect to one another.

However, the present invention is not limited to the drawings, and a number of coil units may vary. For example, as shown in FIG. 6, three coil units may be provided at an angle of 90 degrees with respect to one another.

Here, one of the first coil unit 141 and the second coil unit 142 may be used as a test coil and a third coil unit 143 may be used as a reference coil. Alternatively, both the first coil unit 141 and the second coil unit 142 may be used as test coils.

Alternatively, the first coil unit 141 and the second coil unit 142 may be disposed inside the probe body 110, and a reference coil may be provided outside of the probe body 110 to measure a reference voltage.

Also, at least one of the first coil unit 141 and the second coil unit 142 may be mounted on the outer surface of the probe body 110.

The elastic member 116 may be provided in a lower portion of the coil support unit 118 of the first coil unit 141 or the second coil unit 142 to push a coil unit toward an outside and thereby enable contact with a wall of the heat exchanger tube 10. The elastic member 116 may include an elastic body such as, for example, a spring to maintain the contacted state of the outer surface of the first coil unit 141 or the second coil unit 142 with the inner surface of the heat exchanger tube 10. According to an exemplary embodiment, an ovality, wear, corrosion, and a crack of the heat exchanger tube 10 may be measured concurrently.

To describe the operation of the apparatus 100 for detecting an ovality of a circumference of a cross section of the heat exchanger tube 10, first, the probe body 110 provided with the eddy current coil 140 may be inserted in the heat exchanger tube 10 to measure an ovality of the heat exchanger tube 10.

Subsequently, the probe body 110 may be moved in a lengthwise direction of the heat exchanger tube 10. That is, the probe body 110 may be moved up and down along the inner surface of the heat exchanger tube 10. Subsequently, the probe body 110 may be rotated in a circumferential direction of the inner surface of the heat exchanger tube 10. However, the movement and rotation operations of the probe body 110 may be performed at different times, for example, the rotation operation after the movement operation, however, the movement and rotation operations may be performed concurrently. When the probe body 110 is moved in a lengthwise direction of the heat exchanger tube 10 or is rotated in a circumferential direction of the heat exchanger tube 10 as described in the foregoing, the eddy current coil 140 disposed in the probe body 110 may measure an eddy current resistance of the heat exchanger tube 10. Also, a signal amplitude change of the eddy current resistance measured in the first coil unit 141 and the second coil unit 142 may be measured, and a difference in measured signal amplitude between the first coil unit 141 and the second coil unit 142 may be detected, whereby an ovality of the heat exchanger tube 10 may be detected.

More particularly, FIGS. 2 and 3 illustrate a non-oval or normal state of the heat exchanger tube 10. Referring to FIGS. 2 and 3, an absolute value of an eddy current resistance may be measured in each of the first coil unit 141 and the second coil unit 142. Also, a difference value of the eddy current resistance measured in the first coil unit 141 and the second coil unit 142 may be detected, and an ovality of the heat exchanger tube 10 may be detected through the detected difference value. As shown in FIG. 2, when the heat exchanger tube 10 is in a normal state, more particularly, in a circular shape, signals detected in the first coil unit 141 and the second coil unit 142 may be equal because a distance between the inner surface of the heat exchanger tube 10 and the first coil unit 141 is equal to a distance between the inner surface of the heat exchanger tube 10 and the second coil unit 142. Accordingly, as shown in FIG. 3, when the heat exchanger tube 10 is in a normal state, a signal amplitude difference obtained in the first coil unit 141 and the second coil unit 142 is a value of "0". Also, because the apparatus 100 for detecting an ovality of a circumference of a cross section of the heat exchanger tube 10 detects an ovality while rotating the probe body 110 continuously, no change occurs in a signal amplitude difference detected in the first coil unit 141 and the second coil unit 142 for each location of the circumference of the heat exchanger tube 10 and thus, a measured graph appears as a straight line. In contrast, as shown in FIG. 4, when the heat exchanger tube 10 is in an oval state, a difference may occur between a distance from the first coil unit 141 to the inner surface of the heat exchanger tube 10 and a distance from the second coil unit 142 to the inner surface of the heat exchanger tube 10. This difference in distances may result in a difference between values of signals measured in the first coil unit 141 and the second coil unit 142. Also, because the apparatus 100 for detecting an ovality of a circumference of a cross section of the heat exchanger tube 10 detects an ovality while rotating the probe body 110 continuously, a change may occur in a signal amplitude detected in the first coil unit 141 and the second coil unit 142 for each location of the circumference of the heat exchanger tube 10. Since the first coil unit 141 and the second coil unit 142 are disposed at an angle of 90 degrees with respect to one another, signals detected in the first coil unit 141 and the second coil unit 142 may have a shape of a sine or cosine wave. Similarly, when the heat exchanger tube 10 is in an oval state, an amplitude difference of signals detected in the first coil unit 141 and the second coil unit 142 may have a form of an approximate sine curve as shown in FIG. 5. A magnitude of the amplitude of the detected sine curve may be proportional to a degree of ovality of the heat exchanger tube 10. Accordingly, an existence of the ovality of the heat exchanger tube 10 and a degree of the ovality may be detected easily by measuring a shape and amplitude in a graph illustrating a signal amplitude difference detected in the eddy current coil 140.

The apparatus 100 for detecting an ovality of the heat exchanger tube 10 according to an exemplary embodiment may measure an eddy current resistance in a lengthwise direction and a circumferential direction of the heat exchanger tube 10 only by the linear movement and rotation of the probe body 110.

According to exemplary embodiments, an ovality of the heat exchanger tube 10 may be detected from a difference in measured signal amplitude between the first coil unit 141 and the second coil unit 142, and continuous detection along the length of the heat exchanger tube 10 may be implemented.

However, the present invention is not limited thereby, and an ovality of the heat exchanger tube 10 may be detected by comparing amplitude of signals measured in the first coil unit 141 and the second coil unit 142 to a reference voltage of the third coil unit 143 corresponding to a reference coil.

Although the description is made based on an example of using three coils, the present invention is not limited thereto and includes any invention configured by including two coils according to the present invention. That is, if a coil implemented according to the present invention is included, even the invention including two or more coils is included in the scope of the present patent.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An apparatus for detecting an ovality of a circumference of a cross section of a heat exchanger tube (10), the apparatus comprising:
a probe body (110) configured to be inserted in the heat exchanger tube (10), moveable in a lengthwise direction of the heat exchanger tube (10), and rotatable in a circumferential direction of an inner surface of the heat exchanger tube (10);
support foots (122, 132) disposed at both ends of the probe body (110) to support a linear movement and a rotation of the probe body;
a coil support unit (118) provided in the probe body; and
an eddy current coil (140) mounted on the coil support unit, and including at least a first coil unit (141) and a second coil unit (142) disposed at different locations in a circumferential direction of the probe body (110) and configured to measure an eddy current resistance according to a change in a distance between the inner surface of the heat exchanger tube and said first coil unit (141) and said second coil unit (142) when said probe body (110) is rotating relative to said heat exchanger tube (10) in order to detect the ovality of the heat exchanger tube (10),
wherein the eddy current coil uses one coil unit among the first coil unit and the second coil unit as a test coil and a remaining coil as a reference coil, or uses the first coil unit and the second coil unit as test coils, and
wherein the apparatus is configured to detect the ovality of the heat exchanger tube (10) and a degree of the ovality using an amplitude difference between signals measured in the first coil unit (141) and the second coil unit (142) in dependence on a difference between a distance from the first coil unit (141) to the inner surface of the heat exchanger tube (10) and a second distance from the second coil unit (142) to the inner surface of the heat exchanger tube (10).

2. The apparatus of claim 1, wherein the coil support unit (118) is made from an elastic member or includes an elastic member (116) in a lower portion of the coil support unit and thereby includes a structure for elastically supporting one of the first coil unit (141) and the second coil unit (142) to enable contact with the inner surface of the heat exchanger tube (10);

3. The apparatus of claim 1, wherein one of the first coil unit (141) and the second coil unit (142) or both the first coil unit and the second coil unit are mounted on an outer surface of the probe body.

4. The apparatus of claim 1, wherein also wear, corrosion, and a crack inside the heat exchanger tube (10) are concurrently measured using the amplitude difference between the signals measured in the first coil unit (141) and the second coil unit (142).

5. The apparatus of claim 1, wherein the first coil unit (141) and the second coil unit (142) are disposed at an angle of 90 degrees with respect to one another.

6. The apparatus of claim 1, wherein the apparatus is provided with a recorder to record an amplitude difference between said signals measured in the first coil unit (141) and the second coil unit (142).

7. A method of detecting an ovality of a circumference of a cross section of a heat exchanger tube (10), the method comprising:
inserting a probe body (110) in a heat exchanger tube (10);
moving the probe body (110) in a lengthwise direction of the heat exchanger tube (10);
rotating the probe body (110) in a circumferential direction of an inner surface of the heat exchanger tube (10);
measuring an eddy current resistance according to a change in a distance between the inner surface of the heat exchanger tube (10) and a first coil unit (141) and a second coil unit (142) disposed at different locations in a circumferential direction of the probe body (110) when said probe body (110) is rotating relative to said heat exchanger tube (10) in order to detect the ovality of the heat exchanger tube (10),
wherein one coil unit among the first coil unit (141) and the second coil unit (142) is used as a test coil and a remaining coil unit as a reference coil, or the first coil unit (141) and the second coil unit (142) are used as reference coils, and
detecting the ovality of the heat exchanger tube (10) and a degree of ovality by using a signal amplitude difference of the eddy current resistance measured in the first coil unit (141) and the second coil unit (142), in dependence on a difference between a distance from the first coil unit (141) to the inner surface of the heat exchanger tube (10) and a second distance from the second coil unit (142) to the inner surface of the heat exchanger tube (10).

8. The method of claim 7, wherein detecting the ovality of the heat exchanger tube (10) and a degree of ovality further comprises elastically supporting one of the first coil unit (141) and the second coil unit (142) by means of the coil support unit (118), wherein the coil support unit (118) is made from an elastic member or includes an elastic member (116) in a lower portion of the coil support unit (118) and thereby includes a structure to enable contact with the inner surface of the heat exchanger tube (10).

## Patentansprüche

1. Vorrichtung zur Erkennung einer Ovalität eines Umfangs eines Querschnitts eines Wärmetauscherrohrs (10), wobei die Vorrichtung umfasst:
einen Sondenkörper (110), der dazu ausgestaltet ist, in das Wärmetauscherrohr (10) eingeführt zu werden, in einer Längsrichtung des Wärmetauscherrohrs (10) bewegbar ist, und in einer Umfangsrichtung einer Innenfläche des Wärmetauscherrohrs (10) drehbar ist;
Stützfüße (122, 132), die an beiden Enden des Sondenkörpers (110) angeordnet sind, um eine lineare Bewegung und eine Drehung des Sondenkörpers zu unterstützen;
eine Spulentrageinheit (118), die in dem Sondenkörper vorgesehen ist; und
eine Wirbelstromspule (140), die an der Spulentrageinheit angebracht ist, und wenigstens eine erste Spuleneinheit (141) und eine zweite Spuleneinheit (142) umfasst, die an unterschiedlichen Stellen in einer Umfangsrichtung des Sondenkörpers (110) angeordnet und dazu ausgestaltet sind, einen Wirbelstromwiderstand gemäß einer Änderung eines Abstands zwischen der Innenfläche des Wärmetauscherrohrs und der ersten Spuleneinheit (141) und der zweiten Spuleneinheit (142), wenn der Sondenkörper (110) sich bezogen auf das Wärmetauscherrohr (10) dreht, zu messen, um die Ovalität des Wärmetauscherrohrs (10) zu erkennen,
wobei die Wirbelstromspule eine Spuleneinheit aus der ersten Spuleneinheit und der zweiten Spuleneinheit als eine Testspule und eine verbleibende Spule als eine Referenzspule verwendet, oder die erste Spuleneinheit und die zweite Spuleneinheit als Testspulen verwendet, und
wobei die Vorrichtung dazu ausgestaltet ist, die Ovalität des Wärmetauscherrohrs (10) und einen Grad der Ovalität unter Verwendung einer Amplitudendifferenz zwischen Signalen zu erkennen, die in der ersten Spuleneinheit (141) und der zweiten Spuleneinheit (142) in Abhängigkeit von einem Unterschied zwischen einem Abstand von der ersten Spuleneinheit (141) zur Innenfläche des Wärmetauscherrohrs (10) und einem zweiten Abstand von der zweiten Spuleneinheit (142) zur Innenfläche des Wärmetauscherrohrs (10) gemessen werden.

2. Vorrichtung nach Anspruch 1, wobei die Spulentrageinheit (118) aus einem elastischen Element gefertigt ist oder in einem unteren Abschnitt der Spulentrageinheit ein elastisches Element (116) umfasst und dadurch eine Struktur zum elastischen Tragen einer der ersten Spuleneinheit (141) und der zweiten Spuleneinheit (142) zum Ermöglichen von Kontakt mit der Innenfläche des Wärmetauscherrohrs (10) umfasst.

3. Vorrichtung nach Anspruch 1, wobei eine der ersten Spuleneinheit (141) und der zweiten Spuleneinheit (142) oder sowohl die erste Spuleneinheit als auch die zweite Spuleneinheit an einer Außenfläche des Sondenkörpers angebracht ist/sind.

4. Vorrichtung nach Anspruch 1, wobei gleichzeitig auch Verschleiß, Korrosion und ein Riss im Inneren des Wärmetauscherrohrs (10) unter Verwendung der Amplitudendifferenz zwischen den Signalen, die in der ersten Spuleneinheit (141) und der zweiten Spuleneinheit (142) gemessen werden, gemessen werden.

5. Vorrichtung nach Anspruch 1, wobei die erste Spuleneinheit (141) und die zweite Spuleneinheit (142) bezogen aufeinander in einem Winkel von 90 Grad angeordnet sind.

6. Vorrichtung nach Anspruch 1, wobei die Vorrichtung mit einem Aufzeichnungsgerät versehen ist, um eine Amplitudendifferenz zwischen den Signalen, die in der ersten Spuleneinheit (141) und der zweiten Spuleneinheit (142) gemessen werden, aufzuzeichnen.

7. Verfahren zur Erkennung einer Ovalität eines Umfangs eines Querschnitts eines Wärmetauscherrohrs (10), wobei das Verfahren umfasst:
Einführen eines Sondenkörpers (110) in ein Wärmetauscherrohr (10);
Bewegen des Sondenkörpers (110) in einer Längsrichtung des Wärmetauscherrohrs (10);
Drehen des Sondenkörpers (110) in einer Umfangsrichtung einer Innenfläche des Wärmetauscherrohrs (10);
Messen eines Wirbelstromwiderstands gemäß einer Änderung eines Abstands zwischen der Innenfläche des Wärmetauscherrohrs (10) und einer ersten Spuleneinheit (141) und einer zweiten Spuleneinheit (142), die an unterschiedlichen Stellen in einer Umfangsrichtung des Sondenkörpers (110) angeordnet sind, wenn der Sondenkörper (110) sich bezogen auf das Wärmetauscherrohr (10) dreht, um die Ovalität des Wärmetauscherrohrs (10) zu erkennen,
wobei eine Spuleneinheit aus der ersten Spuleneinheit (141) und der zweiten Spuleneinheit (142) als eine Testspule und eine verbleibende Spuleneinheit als eine Referenzspule verwendet wird, oder die erste Spuleneinheit (141) und die zweite Spuleneinheit (142) als Referenzspulen verwendet werden, und
Erkennen der Ovalität des Wärmetauscherrohrs (10) und eines Grades an Ovalität unter Verwendung einer Signalamplitudendifferenz des Wirbelstromwiderstands, der in der ersten Spuleneinheit (141) und der zweiten Spuleneinheit (142), in Abhängigkeit von einem Unterschied zwischen einem Abstand von der ersten Spuleneinheit (141) zur Innenfläche des Wärmetauscherrohrs (10) und einem zweiten Abstand von der zweiten Spuleneinheit (142) zur Innenfläche des Wärmetauscherrohrs (10) gemessen wird.

8. Verfahren nach Anspruch 7, wobei das Erkennen der Ovalität des Wärmetauscherrohrs (10) und eines Grades an Ovalität ferner ein elastisches Tragen einer der ersten Spuleneinheit (141) und der zweiten Spuleneinheit (142) mittels der Spulentrageinheit (118) umfasst,
wobei die Spulentrageinheit (118) aus einem elastischen Element gefertigt ist oder in einem unteren Abschnitt der Spulentrageinheit (118) ein elastisches Element (116) umfasst und dadurch eine Struktur zum Ermöglichen von Kontakt mit der Innenfläche des Wärmetauscherrohrs (10) umfasst.

## Revendications

1. Appareil de détection d'une ovalité d'une circonférence d'une section transversale d'un tube échangeur de chaleur (10), l'appareil comprenant :
un corps de sonde (110) configuré pour être inséré dans le tube échangeur de chaleur (10), pour être mobile dans la direction longitudinale du tube échangeur de chaleur (10), et pour pouvoir tourner dans une direction circonférentielle d'une surface intérieure du tube échangeur de chaleur (10) ;
des pieds de support (122, 132) disposés aux deux extrémités du corps de sonde (110) pour permettre un mouvement linéaire et une rotation du corps de sonde ;
une unité de support de bobine (118) prévue dans le corps de sonde ; et
une bobine à courant de Foucault (140) montée sur l'unité de support de bobine et comprenant au moins une première unité de bobine (141) et une deuxième unité de bobine (142) disposées à des emplacements différents dans une direction circonférentielle du corps de sonde (110) et configurées pour mesurer une résistance aux courants de Foucault en fonction d'une variation de distance entre la surface intérieure du tube échangeur de chaleur et ladite première unité de bobine (141) et ladite deuxième unité de bobine (142) lorsque ledit corps de sonde (110) est en rotation par rapport audit tube échangeur de chaleur (10) afin de détecter l'ovalité du tube échangeur de chaleur (10),
dans lequel la bobine à courant de Foucault utilise une unité de bobine parmi la première unité de bobine et la deuxième unité de bobine comme bobine de test et une bobine restante comme bobine de référence, ou utilise la première unité de bobine et la deuxième unité de bobine comme bobines de test, et
dans lequel l'appareil est configuré pour détecter l'ovalité du tube échangeur de chaleur (10) et un degré d'ovalité en utilisant une différence d'amplitude entre les signaux mesurés dans la première unité de bobine (141) et la deuxième unité de bobine (142) en fonction d'une différence entre une distance entre la première unité de bobine (141) et la surface intérieure du tube échangeur de chaleur (10) et une deuxième distance entre la deuxième unité de bobine (142) et la surface intérieure du tube échangeur de chaleur (10).

2. Appareil selon la revendication 1, dans lequel l'unité de support de bobine (118) est formée d'un élément élastique ou comprenant un élément élastique (116) dans une partie inférieure de l'unité de support de bobine et comprend ainsi une structure pour supporter élastiquement l'une de la première unité de bobine (141) et la deuxième unité de bobine (142) pour permettre le contact avec la surface intérieure du tube échangeur de chaleur (10).

3. Appareil selon la revendication 1, dans lequel l'une de la première unité de bobine (141) et de la deuxième unité de bobine (142) ou à la fois la première unité de bobine et la deuxième unité de bobine, sont montées sur une surface extérieure du corps de sonde.

4. Appareil selon la revendication 1, dans lequel l'usure, la corrosion et une fissure à l'intérieur du tube d'échangeur de chaleur (10) sont également mesurées simultanément à l'aide de la différence d'amplitude entre les signaux mesurés dans la première unité de bobine (141) et dans la deuxième unité de bobine (142).

5. Appareil selon la revendication 1, dans lequel la première unité de bobine (141) et la deuxième unité de bobine (142) sont disposées en formant un angle de 90 degrés l'une par rapport à l'autre.

6. Appareil selon la revendication 1, l'appareil étant muni d'un enregistreur destiné à enregistrer la différence d'amplitude entre lesdits signaux mesurés dans la première unité de bobine (141) et la deuxième unité de bobine (142).

7. Procédé de détection d'une ovalité d'une circonférence de la section transversale d'un tube échangeur de chaleur (10), le procédé comprenant:
insérer un corps de sonde (110) dans un tube échangeur de chaleur (10) ;
déplacer le corps de sonde (110) dans une direction longitudinale du tube échangeur de chaleur (10) ;
faire tourner le corps de sonde (110) dans une direction circonférentielle d'une surface intérieure du tube échangeur de chaleur (10) ;
mesurer une résistance aux courants de Foucault en fonction d'une variation de distance entre la surface intérieure du tube échangeur de chaleur (10) et une première unité de bobine (141) et une deuxième unité de bobine (142) disposées à des emplacements différents dans une direction circonférentielle du corps de sonde (110) lorsque ledit corps de sonde (110) est en rotation par rapport audit tube échangeur de chaleur (10) afin de détecter l'ovalité du tube échangeur de chaleur (10),
dans lequel une unité de bobine parmi la première unité de bobine (141) et la deuxième unité de bobine (142) est utilisée comme bobine de test et une unité de bobine restante est utilisée comme bobine de référence, ou la première unité de bobine (141) et la deuxième unité de bobine (142) sont utilisées comme bobines de référence, et
détecter l'ovalité du tube échangeur de chaleur (10) et un degré d'ovalité à l'aide d'une différence d'amplitude de signal de la résistance aux courants de Foucault mesurée dans la première unité de bobine (141) et dans la deuxième unité de bobine (142), en fonction d'une différence entre une distance entre la première unité de bobine (141) et la surface intérieure du tube échangeur de chaleur (10) et une deuxième distance entre la deuxième unité de bobine (142) et la surface intérieure du tube échangeur de chaleur (10).

8. Procédé selon la revendication 7, dans lequel la détection de l'ovalité du tube échangeur de chaleur (10) et un degré d'ovalité comprend en outre supporter élastiquement l'une de la première unité de bobine (141) et de la deuxième unité de bobine (142) au moyen de l'unité de support de bobine (118), dans lequel l'unité de support de bobine (118) est formée d'un élément élastique ou comprend un élément élastique (116) dans une partie inférieure de l'unité de support de bobine (118) et comprend ainsi une structure permettant le contact avec la surface intérieure du tube échangeur de chaleur (10).
